# EUROPEAN PATENT APPLICATION

(11) **EP 4 527 642 A1**
(43) Date of publication of application: **26.03.2025**
(21) Application number: 23275141.2
(22) Date of filing: 25.09.2023
(51) Int. Cl.: B60F 3/00, B62D 57/028, B62D 61/12, B62D 63/02, B60G 7/00, F41A 9/87, F41H 7/00

(54) **A VEHICLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A vehicle (10) comprising a chassis suspension system (400). The chassis suspension system (400) comprises a plurality of wheel arms (402), each wheel arm (402) extending away from a different chassis mount (220) on the chassis (200) to a respective drive wheel (404), each drive wheel (404) being pivotably mounted relative to its respective wheel arm (402). Each drive wheel (404) is coupled to a drive system (700) operable to drive the drive wheel (404). The vehicle (10) is configured to move from one location to another and/or change the orientation of the chassis (200) from a **first orientation** to a **second orientation** using a **first mode of operation** wherein the drive system (700) is operable to drive the drive wheel (404) along and/or through the support medium (500). The vehicle (10) is configured to move from one location to another and/or change the orientation of the chassis (200) from a **first orientation** to a **second orientation** using a **second mode of operation** wherein the chassis suspension system (400) is operable to draw the chassis (200) in a **first direction (D1),** locating a first drive wheel (404-1) of the plurality of drive wheels (404) into driving engagement with the support medium (500), and controlling the respective wheel arm (402) to pivot relative to the chassis (200) along the x-axis, y-axis and/or z-axis to exert a force on the support medium (500) in a **second direction (D1)** via the first drive wheel (404-1) in order to generate a reaction force to propel the chassis (200) in the **first direction (D1),** wherein the **second direction (D2)** is in an opposite direction to the **first direction (D1).**

## Description

### FIELD

The present disclosure relates to a vehicle.

### BACKGROUND

Wheeled vehicles are known which can travel across a wide variety of terrains. Such vehicles may be entirely dependent on force being provided by driven rotation of the wheels to move the vehicle. If is there is a lack of traction (for example because of the nature of the terrain), the wheels are damaged and/or the drive system is impaired, then the vehicle may not be able to continue to its destination unless it is recovered by another vehicle or fixed by a user. Depending on the nature of the vehicle and its objective, this may pose a significant problem.

Hence a wheeled vehicle which is operable to overcome the limitations of conventional wheeled vehicles when travelling across a wide range of terrains, is highly desirable.

### SUMMARY

According to the present disclosure there is provided an apparatus, method and system as set forth in the appended claims. Other features of the invention will be apparent from the dependent claims, and the description which follows.

Accordingly there may be provided a vehicle (10) comprising a chassis (200) extending along an x-axis, a first end (202) of the chassis (200) and a second end (204) of the chassis (200) spaced apart from one another along the x-axis; the chassis (200) extending along a y-axis, a first side (206) of the chassis (200) and a second side (208) of the chassis (200) spaced apart from one another along the y-axis; the x-axis being at right angles to the y-axis; the x-axis defining a chassis roll axis (210), the y-axis defining a chassis pitch axis (212) and a z-axis defining a chassis yaw axis (214); the z-axis being perpendicular to the x-axis and y-axis.

The vehicle (10) may further comprise a chassis suspension system (400) comprising a plurality of wheel arms (402), each wheel arm (402) extending away from a different chassis mount (220) on the chassis (200) to a respective drive wheel (404), each drive wheel (404) being pivotably mounted relative to its respective wheel arm (402). Each drive wheel (404) may be coupled to a drive system (700) operable to drive the drive wheel (404).

The vehicle (10) may be configured to move from one location to another and/or change the orientation of the chassis (200) from a first orientation to a second orientation using a first mode of operation wherein the drive system (700) is operable to drive the drive wheel (404) relative to the support medium (500).

The vehicle (10) may be configured to move from one location to another and/or change the orientation of the chassis (200) from a first orientation to a second orientation using a second mode of operation wherein the chassis suspension system (400) is operable to draw the chassis (200) in a **first direction (D1),** which extends in, or is parallel to, a plane defined by the x-axis and y-axis, by locating a first drive wheel (404-1) of the plurality of drive wheels (404) into driving engagement with the support medium (500); controlling the respective wheel arm (402) to pivot relative to the chassis (200) along the x-axis, y-axis and/or z-axis to exert a force on the support medium (500) in a **second direction (D2)** via the first drive wheel (404-1) in order to generate a reaction force to propel the chassis (200) in the **first direction (D1),** wherein the **second direction (D2)** is in an opposite direction to the **first direction (D1).**

In the second mode of operation, the or each drive wheel (404) may be operable pivot relative to its respective wheel arm (402).

The step of locating a first drive wheel (404-1) of the plurality of drive wheels (404) into driving engagement with the support medium (500) may comprise moving the first drive wheel (404-1) relative to the support medium (500) with the drive system (700) engaged to drive the drive wheel (404).

The step of locating a first drive wheel (404-1) of the plurality of drive wheels (404) into driving engagement with the support medium (500) may comprise moving the first drive wheel (404-1) relative to the support medium (500) with the drive system (700) dis-engaged and the drive wheel (404) braked.

The step of locating a first drive wheel (404-1) of the plurality of drive wheels (404) into driving engagement with the support medium (500) may comprise moving the first drive wheel (404-1) relative to the support medium (500) with the drive system (700) dis-engaged and the first drive wheel (404-1) unbraked so the drive wheel (404) is free to rotate.

In the second mode of operation, the first drive wheel (404-1) may be braked so that the drive wheel (404) cannot rotate.

In the second mode of operation, the first drive wheel (404-1) may be unbraked so that the drive wheel (404) is free to rotate.

In the second mode of operation, during at least part of the period when the respective wheel arm (402) is pivoted relative to the chassis (200) along the x-axis, y-axis and/or z-axis to exert a force on the support medium (500) in the **second direction (D2)** via the first drive wheel (404-1) in order to generate a reaction force to propel the chassis (200) in the **first direction (D1),** the first drive wheel (404-1) may be driven by the drive system (700).

In the second mode of operation, during at least part of the period when the respective wheel arm (402) is pivoted relative to the chassis (200) along the x-axis, y-axis and/or z-axis to exert a force on the support medium (500) in the **second direction (D2)** via the first drive wheel (404-1) in order to generate a reaction force to propel the chassis (200) in the **first direction (D1),** the first drive wheel (404-1) may be braked by the drive system (700).

The second mode of operation may further comprise drawing the chassis (200) in the **first direction (D1)** by locating a third drive wheel (404-3) of the plurality of drive wheels (404) into driving engagement with the support medium (500), controlling the third drive wheel (404-3) to pivot relative to its respective wheel arm (402) and/or control the respective wheel arm (402) to pivot relative to the chassis (200) along the x-axis, y-axis and/or z-axis to exert a force on the support medium (500) in the **second direction (D2)** via the third drive wheel (404-3) in order to generate a reaction force to propel the chassis (200) in the **first direction (D1).**

The first drive wheel (404-1) may be provided at the first end (202) and first side (206) of the chassis (200). The third drive wheel (404-3) may be provided at the second end (204) and the second side (208) of the chassis (200).

In the second mode of operation the chassis suspension system (400) may be operable to draw the chassis (200) in the **first direction (D1),** by locating a first drive wheel (404-1) and a second drive wheel (404-2) of the plurality of drive wheels (404) into driving engagement with the support medium (500), locating the chassis (200) into engagement with the support medium (500); and controlling the first drive wheel (404-1) and second drive wheel (404-2) to pivot relative to their respective wheel arms (402) and/or control the respective wheel arms (402) to pivot relative to the chassis (200) along the x-axis, y-axis and/or z-axis to exert a force on the support medium (500) in the **second direction (D2)** via the first drive wheel (404-1) and the second drive wheel (404-2) in order to generate a reaction force to propel the chassis (200) in the **first direction (D1).**

In the second mode of operation the chassis suspension system (400) may be operable to control the wheel arms (402) to support the chassis (200) spaced apart from the support medium (500) before, during and after the chassis (200) is moved in the **first direction (D1).**

In the second mode of operation the chassis suspension system (400) may be operable to draw the chassis (200) in the **first direction (D1)** by locating a first drive wheel (404-1) and a second drive wheel (404-2) of the plurality of drive wheels (404) into driving engagement with the support medium (500) locating the chassis (200) into engagement with the support medium (500); and controlling the first drive wheel (404-1) and second drive wheel (404-2) to pivot relative to the chassis (200) along the x-axis, y-axis and/or z-axis to exert a force on the support medium (500) in the **second direction (D2)** via the first drive wheel (404-1) and via the second drive wheel (404-2) in order to generate a reaction force to propel the chassis (200) in the **first direction (D1)** through the support medium (500) and/or along the surface of the support medium (500).

In the second mode of operation the chassis suspension system (400) may be operable to draw the chassis (200) in the **first direction (D1)** by locating a first drive wheel (404-1) and a second drive wheel (404-2) of the plurality of drive wheels (404) into driving engagement with the support medium (500); locating the chassis (200) into engagement with the support medium (500); and controlling the first drive wheel (404-1) and second drive wheel (404-2) to pivot relative to their respective wheel arms (402) and/or controlling the respective wheel arms (402) to pivot relative to the chassis (200) along the x-axis, y-axis and/or z-axis to exert a force on the support medium (500) in the **second direction (D2)** via the first drive wheel (404-1) and the second drive wheel (404-2) in order to generate a reaction force to propel the chassis (200) in the **first direction (D1)** while lifting the chassis (200) away from the support medium (500) and then lowering the chassis (200) back onto the support medium (500).

The first drive wheel (404-1) may be provided at the first end (202) and the first side (206) of the chassis (200). The second drive wheel (404-2) may be provided at the first end (202) and the second side (208) of the chassis (200).

Each wheel arm (402) may have a chassis mount end (410) and a drive wheel mount end (412). The chassis mount end (410) of each wheel arm (402) may be provided with a chassis mounting member (414), the chassis mount end (410) of each wheel arm (402) and chassis mounting member (414) being pivotable relative to one another around a chassis mount pivoting axis (230).

The chassis mounting member (414) may be configured to support the chassis mount end (410) of the wheel arm (402) so that the wheel arm (402) and chassis mounting member (414) are operable to pivot relative to one another about the chassis mount pivoting axis (230). The drive wheel mount end (412) of each wheel arm (402) may be provided with a drive wheel mounting member (416), the drive wheel mount end (412) of each wheel arm (402) and drive wheel mounting member (416) being pivotable relative to one another around a drive wheel mount pivoting axis (432). Each drive wheel mounting member (416) may be configured to couple with the drive wheel mount end (412) of the wheel arm (402) so that each wheel arm (402) and drive wheel mounting member (416) are operable to pivot relative to one another about the drive wheel mount pivoting axis (432).

Each wheel arm (402) may be provided with a wheel arm actuator (430) to control the orientation of each wheel arm (402) relative to the chassis (200).

Each drive wheel mounting member (416) may be provided with a drive wheel mounting member actuator (440) to control the orientation of each drive wheel (404), relative to its respective wheel arm (402).

The drive wheel drive system (700) may comprise an actuator (702) coupled to the or each drive wheel (404). Each of the wheel arm actuators (430), drive wheel mounting member actuators (440) and drive wheel drive system actuators (702) may be operable independently of each other.

The vehicle further may further comprise a control system (600) operable to control the wheel arm actuators (430), drive the wheel mounting member actuators (440) and drive wheel drive system actuators (702) to execute the first mode of operation and the second mode of operation.

The chassis (200) may be configured to be buoyant.

The underside of the chassis (200) may comprise grip/tread type features.

The drive wheel (404) may be configured for direct engagement with the support medium (500).

The drive wheel (404) may be configured for indirect engagement with the support medium.

The chassis (200) may in part define, support and/or carry a payload, wherein the payload may comprise a weapon system, a weapon loading system, an ammunition delivery system, an evacuation pod and/or a crane.

There may also be provided a method of operating a vehicle, the method comprising moving (eg translating, displacing) the chassis (200) from one location to another and/or changing the orientation of the chassis (200) from a **first orientation** to a **second orientation** using a **first mode of operation** wherein the drive system (700) is operable to drive the drive wheel (404) along and/or through the support medium (500).

There may also be provided a method of operating a vehicle, the method comprising moving (eg translating, displacing) the chassis (200) from one location to another and/or changing the orientation of the chassis (200) from a **first orientation** to a **second orientation** using a **second mode of operation** wherein the chassis suspension system (400) is operable to draw the chassis (200) in a **first direction (D1),** which extends or is parallel to a plane defined by the x-axis and y-axis, by locating a first drive wheel (404-1) of the plurality of drive wheels (404) into driving engagement, which may be direct or indirect, for example via a track, with the support medium (500), controlling the respective wheel arm (402) to pivot relative to the chassis (200) along the x-axis, y-axis and/or z-axis to exert a force on the support medium (500) in a **second direction (D2)** via the first drive wheel (404-1) in order to generate a reaction force to propel the chassis (200) in the **first direction (D1),** wherein the **second direction (D2)** is in an opposite direction to the **first direction (D1).**

Hence there is provided a wheeled vehicle which is operable overcome the limitations of conventional wheeled vehicles when travelling across a wide range of terrains.

### BRIEF DESCRIPTION OF THE FIGURES

Embodiments of the invention will now be described by way of example only with reference to the figures, in which:
Figure 1 illustrates key features of an example of the vehicle according to the present disclosure from a plan view;
Figure 2 illustrates a side view of the vehicle shown in Figure 1;
Figures 3-1 to 6-1 illustrate a plan view, and figures 3-2 to 6-2 illustrate a side view, of a first example of how a vehicle according to the present disclosure may be operated;
Figures 7-1 to 13-1 illustrate a plan view, and figures 7-2 to 14-2 illustrate a side view, of a second example of how a vehicle according to the present disclosure may be operated;
Figures 15-1 to 22-1 illustrate a plan view, and figures 15-2 to 22-2 illustrate a side view, of a third example of how a vehicle according to the present disclosure may be operated; and
Figures 23-1 to 30-1 illustrate a plan view, and figures 23-2 to 30-2 illustrate a side view, of a fourth example of how a vehicle according to the present disclosure may be operated.

### DETAILED DESCRIPTION

The present disclosure relates to a vehicle. The vehicle may be an autonomous vehicle. The vehicle may be a self-propelled vehicle.

As shown in the figures, any of the examples of vehicles of the present disclosure may comprise a chassis 200 with a chassis suspension system 400. Details of how the chassis suspension system may be operated are illustrated in the figures.

The vehicle according to the present disclosure is equipped with one or more wheel arms, and which articulate the wheel arms in such a way as to provide motion to the chassis not primarily by driven rotation of the wheels, or (in some examples) with no rotation of the wheels. The vehicle of the present disclosure provides motion by lifting, positioning, lowering, loading, unloading, dragging or driving of the wheel arms. Where necessary, the chassis itself is also lowered to and lifted from the ground as required as part of the sequence. The chassis may also be dragged along the ground or float on soft terrain.

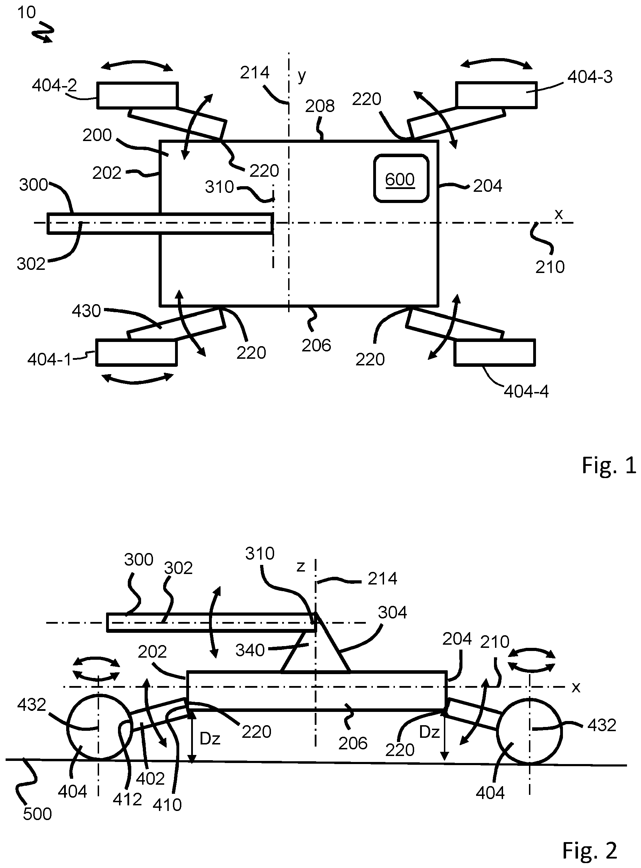

In some examples of the vehicles of the present disclosure the vehicle may be provided with a weapon system comprising a gun 300 (as shown in figures 1, 2). In other examples, the vehicle of the present disclosure may not comprise a weapon system.

The vehicle may form part of a gun targeting system. The vehicle may form part of a gun targeting system for transporting, supporting and targeting a gun.

In examples in which a weapon system is provided, the vehicle may be configured as a gun targeting system by virtue of the operability of the chassis suspension system 400 which supports a chassis 200. Figures 1, 2 show an example of a vehicle according to the present disclosure comprising a gun, where the gun is attached to the vehicle by a mount. The vehicle and configuration of the gun mount provide a gun targeting system. Figure 1 illustrates a plan view and Figure 2 shows a side view.

The vehicle may be configured for carrying equipment and/or a payload. The vehicle may be a delivery vehicle for loading other vehicles with ammunition. The vehicle may be configured to perform operations on other vehicles. The vehicle may be configured to carry (i.e. transport) equipment for performing operations on other vehicles. The vehicle may be configured for carrying an evacuation pod (for example for carrying one or more passengers).

In all examples in which a vehicle of the present disclosure is provided with the chassis suspension system 400, the operability of the chassis suspension system 400 allows for the vehicle to position and orientate itself ready for operation (for example to position weapon system and/or deliver and/or receive ammunition subcomponents.)

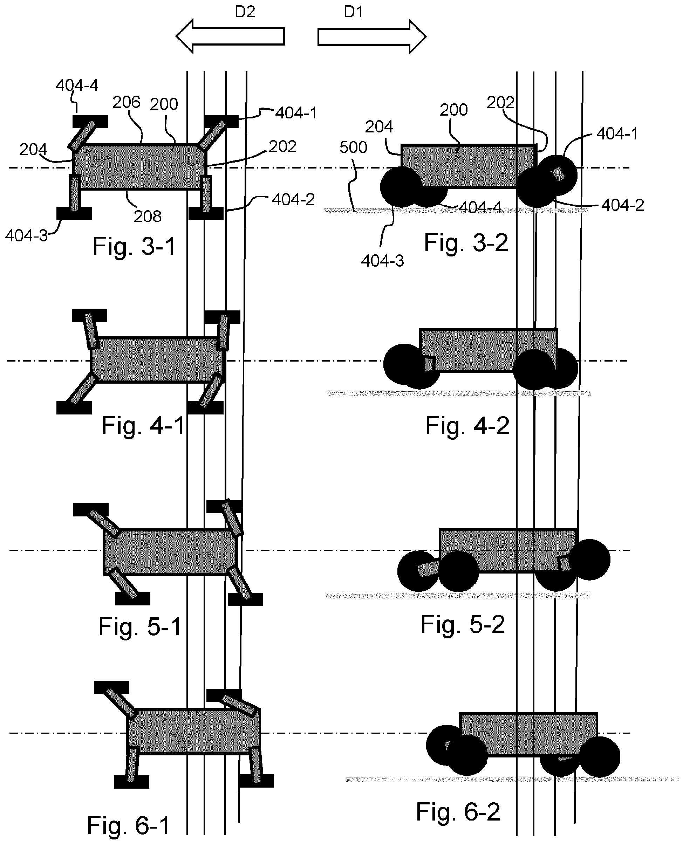

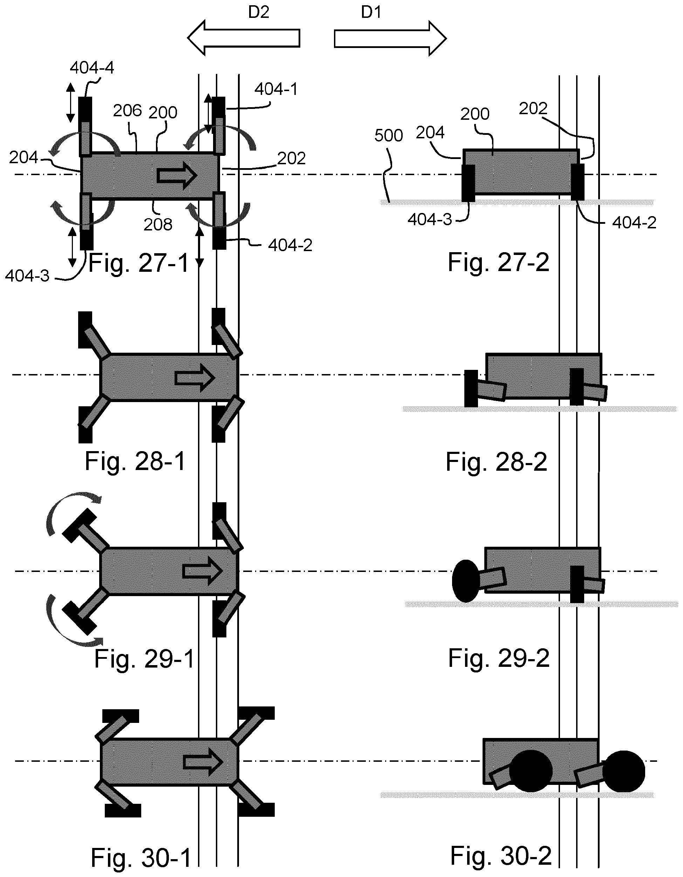

Figure 1 shows a plan view of the vehicle 10 which (in the example shown) comprises a weapon system. Figure 2 show the vehicle 10 of the present disclosure shown from a side view. Figures 1, 2 illustrate key features of the vehicle 10. Figures 3-1 to 30-2 illustrate examples of operation of the vehicle.

As shown in these figures, the vehicle 10 comprises a chassis 200 extending along an x-axis, a first end 202 of the chassis 200 and a second end 204 of the chassis 200 spaced apart from one another along the x-axis. The chassis 200 also extends along a y-axis, a first side 206 of the chassis 200 and a second side 208 of the chassis 200 spaced apart from one another along the y-axis. The x-axis is at right angles to the y-axis.

The x-axis defines a chassis roll axis 210. The y-axis defines a chassis pitch axis 212. A z-axis defines a chassis yaw axis 214, the z-axis being perpendicular to the x-axis and y-axis.

In the example shown the vehicle 10 further comprises a gun barrel 300 having a barrel axis 302. As described above, in other examples the vehicle may be configured for an alternative purpose, and (as shown in Figures 3-1 to 30-2) may not be provided with a weapon system.

Hence the chassis 200 may in part define, support and/or be configured to carry a payload, wherein the payload may comprise a weapon system, a weapon loading system, an ammunition delivery system, an evacuation pod and/or a crane.

In examples where present (and as illustrated in figures 1, 2), the barrel 300 may be mounted to the chassis 200 by a pivot mount 304, the barrel 300 being pivotable relative to the x-axis about a pivot axis 310 aligned with (e.g. parallel to) the y-axis. That is to say, the barrel 300 is pivotable relative to the x-axis about a pivot axis 310 aligned with (e.g. parallel to) the y-axis and mounted such that it is constrained to move in a plane defined by the x-axis and z-axis. Put another way, the barrel 300 is pivotable relative to the x-axis about a pivot axis 310 aligned with (e.g. parallel to) the y-axis, and the barrel 300 is mounted to the chassis 200, directly or indirectly, such that it is constrained to move in a plane defined by the x-axis and z-axis. That is to say, while the barrel 300 may be pivotable relative to the x-axis about a pivot axis 310 aligned with (e.g. parallel to) the y-axis, it is non-rotatable about the z-axis. Put another way, the barrel 300 is limited to pivot relative to the x-axis about a pivot axis 310 aligned with (e.g. parallel to) the y-axis, and mounted to the chassis 200 (e.g. directly or indirectly) so that it cannot be swung around the z-axis.

In all examples, the vehicle 10 comprises a chassis suspension system 400. The chassis suspension system 400 comprises a plurality of wheel arms 402, each wheel arm 402 extending away from a different chassis mount 220 on the chassis 200 to a respective wheel 404, each wheel 404 being rotatably mounted on its respective wheel arm 402, each wheel 404 configured for engagement with a support medium 500.

In the examples shown in the figures there are provided four wheel arms 402 and four wheels 404. There may be provided other examples with greater or fewer wheel arms 402 and wheels 404.

Each drive wheel 404 may be configured for direct or indirect engagement with a support medium 500. The support medium 500 may be any terrain consisting of any material. By way of non limiting example, the support medium 500 may be a road surface, any ground surface, solid/firm land, sand, loose stone, a rocky terrain, mud, bog, snow, ice or water.

The or each drive wheel 404 may be configured for direct engagement with the support medium 500. The or each drive wheel 404 may be configured for indirect engagement with the support medium. For example, the or each drive wheel 404 may be configured for indirect engagement with the support medium via a track (not shown).

The or each wheel may be said to be in driving engagement (or "drivable engagement") with the support medium 500 when the drive wheel 404 is directly engaged or indirectly engaged with the support medium 500 such that a force delivered/induced by the drive wheel 404 to the support medium 500 would generate a reaction force to cause, induce and/or urge the chassis 200 of the vehicle 10 to move relative to (e.g. along, through and/or over) the support medium 500.

Put another way, the or each wheel may be said to be in driving engagement (or "drivable engagement") with the support medium 500 when the drive wheel 404 is directly engaged or indirectly engaged with the support medium 500 such that movement of the drive wheel 404 relative to the chassis 200 would generate a force to cause, induce and/or urge the chassis 200 of the vehicle 10 to move relative to (e.g. along, through and/or over) the support medium 500.

Hence whether a drive wheel is in direct contact with the support medium 500 or indirect contact with the support medium 500 (for example the drive wheel is in contact with the support medium 500 via a track), it may be in driving engagement (or "drivable engagement") with the support medium 500.

Put another way, driving engagement enables a force to be exerted on the support medium 500 through and/or by the drive wheel 404 due to rotational torque applied to the drive wheel 404 by the drive system 700.

That is to say, a drive wheel may be in driving engagement with the support medium 500 when the drive wheel 404 exerts a force on the support medium 500 due to the rotational torque applied to the drive wheel 404 by the drive system 700, whether the drive wheel is in direct contact with the support medium 500 or in indirect contact with the support medium 500.

Additionally or alternatively, driving engagement also enables a force to be exerted on the support medium 500 through the drive wheel 404 by pivoting the wheel arm 402 relative to the chassis 200 and/or by pivoting the wheel 404 relative to its respective wheel arm 402.

Put another way, a drive wheel may be in driving engagement with the support medium 500 when the drive wheel 404 exerts a force on the support medium 500 due to the pivoting of the drive wheel 404 relative to its respective wheel arm 402 and/or due to the pivoting of the wheel arm 402 relative to the chassis 200, whether the drive wheel is in direct contact with the support medium 500 or in indirect contact with the support medium 500.

The chassis 200 may be configured to be buoyant. For example the chassis 200 may be configured as a hull type chassis to allow it to float on fluid, semi-fluid or other soft surfaces.

The underside of the chassis 200 may comprise grip/tread type features. The grip/tread type features may be configured to prevent unintended movement of the chassis during the second mode of operation.

Each wheel arm 402 is pivotable relative to the chassis 200 such that the roll of the chassis 200 about the x-axis, the pitch of the chassis 200 about the y-axis and the yaw of the chassis 200 about the z-axis is controllable by pivoting at least one of the wheel arms 402 relative to the chassis 200. Additionally, each wheel 404 is pivotable relative to its respective wheel arm 402.

Hence each wheel arm 402 may be pivotable relative to the chassis 200 about an axis parallel to the z-axis (as shown in figure 1) and/or may be pivotable relative to the chassis 200 about an axis parallel to the y-axis (for example shown in Figure 2). That is to say, each wheel arm 402 may be pivotable relative to the chassis 200 in a direction having a component parallel to the z-axis and/or parallel to the y-axis. Hence pivoting a wheel arm 402 about the z-axis, will yaw the chassis 200 about the z-axis, and pivoting wheel arm 402 about the y-axis, will pitch the chassis about the y-axis.

Additionally, each wheel 404 is pivotable relative to its respective wheel arm 402 to thereby change the angle of one or more of the wheels 404 relative to its respective wheel arm 402 (for example shown in figures 1, 2). Hence, for example, such pivoting of a wheel 404 relative to its respective wheel arm 402 alters the direction which the wheel 404 is aligned such that when the wheel is rotated the chassis/vehicle is steered in a direction dictated by the orientation of the wheel 404 relative to its respective wheel arm 402.

As shown in figure 2, each wheel arm 402 and wheel 404 are configured to support the chassis 200 apart from the support medium 500. Each wheel arm 402 and wheel 404 may be configured to support the chassis 200 apart from the support medium 500 in the direction of the z-axis. Each wheel arm 402 and wheel 404 may be configured to support the chassis 200 a distance Dz apart from the support medium 500 in the z-axis, where the distance Dz can be varied by the suspension system 400, and may vary for different locations on the chassis 200.

Each wheel arm 402 has a chassis mount end 410 which in use is adjacent to the chassis 200 and a wheel mount end 412 to which may be attached one of the wheels 404 for supporting the chassis 200.

The chassis mount end 410 of each wheel arm 402 may be provided with a chassis mounting member 414 (for example a bracket for attaching to the chassis 200), the chassis mount end 410 of each wheel arm 402 and chassis mounting member 414 being pivotable relative to one another around a chassis mount pivoting axis 230. The chassis mounting member 414 may be configured to support (e.g. couple) the chassis mount end 410 of the wheel arm 402 so that the wheel arm 402 and chassis mounting member 414 are operable to pivot at least 180 degrees relative to one another about the chassis mount pivoting axis 230. That is to say, the wheel arm 402 may be mounted to the chassis mount 220 (for example via the chassis mounting member 414) such that the wheel arm 402 is operable to pivot at least 180 degrees relative to the chassis mount 220. The wheel arm 402 and chassis mounting member 414 may be operable to pivot at least 180 degrees but no more than 200 degrees relative to one another. The wheel arm 402 and chassis mounting member 414 may be operable to pivot at least 180 degrees but no more than 190 degrees relative to one another. For example, the chassis mounting member 414 and/or chassis mount 220 may space the chassis end of the wheel arm 402 apart from the chassis 200 so that the wheel arm 402 may be parallel to the chassis 200 (e.g. extending parallel to the x-axis and/or extending in a direction having a component in a direction parallel to the x-axis), or allow the wheel arm 402 to extend from its chassis mount end towards the chassis 200 (e.g. angled 95 degrees relative to the y-axis and/or extending in a direction having a component in a direction angled 95 degrees to the y-axis). The wheel arm 402 and chassis mount 220 may be pivotable relative to one another around an axis parallel to the z axis and/or around a vertical axis. Each chassis mounting member 414 may comprise a universal joint.

Each wheel arm 402 may be provided with a wheel arm actuator 430 to control the orientation of each wheel arm 402 relative to the chassis 200.

The wheel mount end 412 of each wheel arm 402 may be provided with a wheel mounting member 416 (e.g. a bracket) for attaching to one of the wheels 404, the wheel mount end 412 of each wheel arm 402 and wheel mounting member 416 being pivotable relative to one another around a wheel mount pivoting axis 432.

Each wheel mounting member 416 is configured to couple with the wheel mount end 412 of the wheel arm 402 so that each wheel arm 402 and wheel mounting member 416 (and hence wheel 404) are operable to pivot 180 degrees relative to one another about the wheel mount pivoting axis 432. Each wheel arm 402 and respective wheel mounting member 416 (and hence wheel 404) may be operable to pivot at least 180 degrees but no more than 200 degrees relative to one another about the wheel mount pivoting axis 432. Each wheel arm 402 and respective wheel mounting member 416 (and hence wheel 404) may be operable to pivot at least 180 degrees but no more than 190 degrees relative to one another about the wheel mount pivoting axis 432. Each wheel mounting member 416 may comprise a universal joint 420.

The chassis mount pivoting axis 230 may be parallel to the wheel mount pivoting axis 432. The chassis mount pivoting axis 230 may be aligned with (e.g. parallel to) the z-axis.

Each wheel mounting member 416 is provided with a wheel mounting member actuator 440 to control the orientation of each wheel 402 relative to its respective wheel arm 402.

At least one wheel 404 is coupled to a drive system 700 to rotate the, or each, wheel 404 relative to its respective wheel arm 402 to thereby move the gun targeting system 10 from one location to another. Each drive wheel 404 may be coupled to a drive system 700 operable to drive the drive wheel 404.

The wheel drive system 700 comprises an actuator 702 coupled to the or each wheel 404, wherein each wheel drive actuator 702 is operable independently of each other wheel drive actuator 702.

The suspension system is configured such that the gun targeting system 10 is operable to position the barrel 300 towards an orientation to target an object by pivoting one or more of the wheel arms 402 relative to the chassis 200 and/or by pivoting one or more wheels 404 relative to its respective wheel arm 402 and/or by rotating one or more wheels 404 relative to its respective wheel arm 402.

The vehicle 10 may further comprise a control system 600 operable to control the wheel arm actuators 430 to roll the chassis 200 about the x-axis, pitch the chassis 200 about the y-axis and/or yaw the chassis 200 about the z-axis to orientate (e.g. angle) the chassis 200. For example, the control system 600 is operable to control the suspension 400 position the barrel 300 relative to a target.

Additionally or alternatively the control system 600 may be operable to control the wheel mounting member actuators 440 to pivot each wheel 404 about the wheel mount pivoting axis 432, and each wheel mounting member actuator 440 is operable (e.g. controllable) independently of the other wheel mounting member actuators 440.

In examples where present, the gun barrel 300 may be coupled to a gun barrel actuator 340 operable to pivot the gun barrel 300 about the pivot axis 310, the control system 600 being operable to control the gun barrel actuator 340 to pivot the gun barrel 300 about the pivot axis 310.

Each actuator (i.e. each of the wheel arm actuators 430, wheel mounting member actuators 440 and (in examples where present) the gun barrel actuator 340) may be operable (e.g. controllable) independently of each other actuator.

In all examples shown the vehicle 10 is configured to move (e.g. translate and/or displace) from one location to another and/or change the orientation of the chassis 200 from a **first orientation** to a **second orientation** using a **first mode of operation** wherein the drive system 700 is operable to drive the drive wheel 404 along, over and/or through (e.g. relative to) the support medium 500.

The vehicle 10 is configured to move (e.g. translate and/or displace) from one location to another and/or change the orientation of the chassis 200 from a **first orientation** to a **second orientation** using a **second mode of operation** wherein the chassis suspension system 400 is operable to draw the chassis 200 in a **first direction (D1),** which extends in, or is parallel to, a plane defined by the x-axis and y-axis.

In the **second mode of operation** a first drive wheel 404-1 of the plurality of drive wheels 404 is located (e.g. placed) into driving engagement with the support medium 500.

The first drive wheel 404-1 of the plurality of drive wheels 404 may be located (e.g. placed) into direct engagement with the support medium 500. The first drive wheel 404-1 of the plurality of drive wheels 404 may be located (e.g. placed) into indirect engagement with the support medium 500 (for example in contact with the support medium via a track which is located between the wheel 404 and the support medium 500). In both cases, the drive wheel is in driving engagement with the support medium 500. That is to say, in both cases, movement of the drive wheel induces a force, whether directly or indirectly, on the support medium 500.

After a first drive wheel 404-1 of the plurality of drive wheels 404 is located (e.g. placed) into driving engagement with the support medium 500, the respective wheel arm 402 is controlled to pivot relative to the chassis 200 along the x-axis, y-axis and/or z-axis to exert a force on the support medium 500 in a **second direction (D2)** via the first drive wheel 404-1 in order to generate a reaction force to propel (e.g. move and/or displace) the chassis 200 in the **first direction (D1).** The **second direction (D2)** is in an opposite direction to the **first direction (D1).** By way of non-limiting example, the first direction D1 and second D2 are illustrated in figures 3-1 to 30-2.

As shown in the figures, more than one drive wheel 404 and their respective wheel arms 402 may be controlled to move in the same way as the first drive wheel 404-1 to generate a reaction force to propel (e.g. move and/or displace) the chassis 200 in the **first direction (D1).** The **second direction (D2)** is in an opposite direction to the **first direction (D1).**

For example the **second mode of operation** may further comprise drawing the chassis 200 in the **first direction (D1)** by locating a third drive wheel 404-3 of the plurality of drive wheels 404 into driving engagement with the support medium 500.

After the third drive wheel 404-3 of the plurality of drive wheels 404 is placed into driving engagement with the support medium 500, the third drive wheel 404-3 may be controlled to pivot relative to its respective wheel arm 402 and/or control the respective wheel arm 402 to pivot relative to the chassis 200 along the x-axis, y-axis and/or z-axis to exert a force on the support medium 500 in the **second direction (D2)** via the third drive wheel 404-3 in order to generate a reaction force to propel (e.g. move/displace) the chassis 200 in the **first direction (D1).**

Such an example is shown in figures 3-1 to 6-2 wherein the first drive wheel 404-1 is provided at the first end 202 and first side 206 of the chassis 200, and the third drive wheel 404-3 is provided at the second end 204 and the second side 208 of the chassis 200.

In the example shown the sequence may be repeated with the second drive wheel 404-2 (provided at the first end 202 and the second side 208 of the chassis 200) and then the fourth drive wheel 404-4 (provided at the second end 204 and the first side 206 of the chassis 200).

The control system 600 is operable to control the wheel arm actuators 430, drive wheel mounting member actuators 440 and drive wheel drive system actuators 702 to execute the **first mode of operation** and the **second mode of operation.**

In the **second mode of operation,** the or each drive wheel 404 is operable to be controlled to pivot relative to its respective wheel arm 402.

In some examples, the step of locating a first drive wheel 404-1 of the plurality of drive wheels 404 into driving engagement with the support medium 500 may comprise moving the first drive wheel 404-1 relative to (e.g. along, over and/or through) the support medium 500 with the drive system 700 engaged to drive the drive wheel 404.

In other examples, the step of locating a first drive wheel 404-1 of the plurality of drive wheels 404 into driving engagement with the support medium 500 may comprise moving the first drive wheel 404-1 relative to (e.g. along, over and/or through) the support medium 500 with the drive system 700 dis-engaged and the drive wheel 404 braked.

In further examples step of locating a first drive wheel 404-1 of the plurality of drive wheels 404 into driving engagement with the support medium 500 may comprise moving the first drive wheel 404-1 relative to (e.g. along, over and/or through) the support medium 500 with the drive system 700 dis-engaged and the first drive wheel 404-1 unbraked so the drive wheel 404 is free to rotate.

In the **second mode of operation,** the first drive wheel 404-1 may be braked so that the drive wheel 404 cannot rotate.

In the **second mode of operation,** the first drive wheel 404-1 may be unbraked so that the drive wheel 404 is free to rotate.

In the **second mode of operation,** during at least part of the period when the respective wheel arm 402 is pivoted relative to the chassis 200 along the x-axis, y-axis and/or z-axis to exert a force on the support medium 500 in the **second direction (D2)** via the first drive wheel 404-1 in order to generate a reaction force to propel (e.g. move, displace) the chassis 200 in the **first direction (D1)** the first drive wheel 404-1 may be driven by the drive system 700.

In the **second mode of operation,** during at least part of the period when the respective wheel arm 402 is pivoted relative to the chassis 200 along the x-axis, y-axis and/or z-axis to exert a force on the support medium 500 in the **second direction (D2)** via the first drive wheel 404-1 in order to generate a reaction force to propel (e.g. move/displace) the chassis 200 in the **first direction (D1)** the first drive wheel 404-1 may braked by the drive system 700.

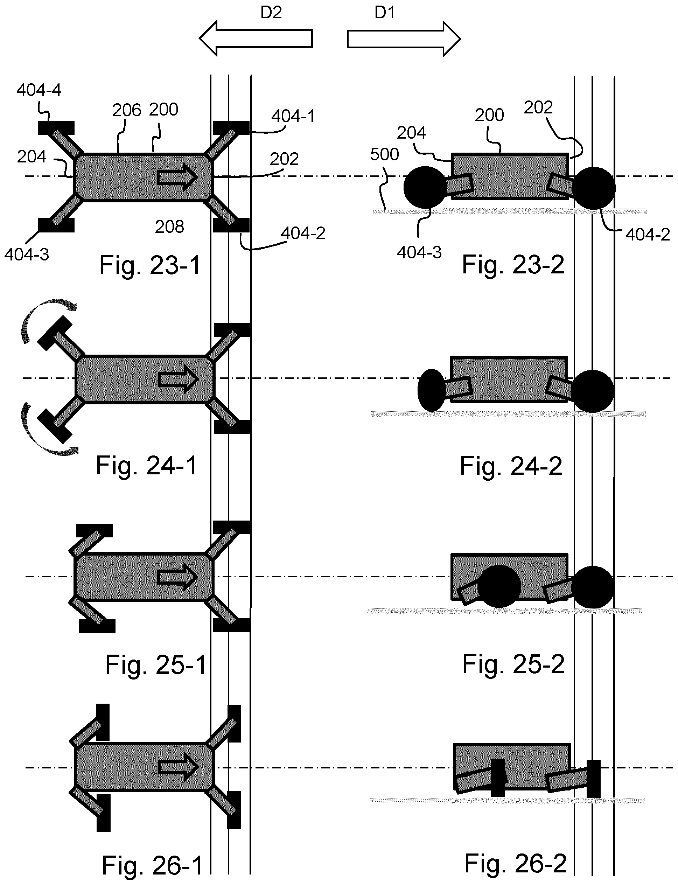

Figures 23-1 to 30-2 illustrate an alternative example of the **second mode of operation** in which the chassis suspension system 400 is operable to draw the chassis 200 in the **first direction (D1),** by first locating a first drive wheel 404-1 and a second drive wheel 404-2 of the plurality of drive wheels 404 into driving engagement with the support medium 500. The chassis 200 is then located into engagement with the support medium 500. Then the first drive wheel 404-1 and second drive wheel 404-2 are controlled to pivot relative to their respective wheel arms 402 and the respective wheel arms 402 are controlled to pivot relative to the chassis 200 along the x-axis, y-axis and/or z-axis to exert a force on the support medium 500 in the **second direction (D2)** via the first drive wheel 404-1 and the second drive wheel 404-2 in order to generate a reaction force to propel (i.e. move, displace) the chassis 200 in the **first direction (D1).**

In the examples of Figures 3-1 to 6-2 and Figures 23-1 to 30-2 of the **second mode of operation** the chassis suspension system 400 may be operable to control the wheel arms 402 to support the chassis 200 spaced apart from the support medium 500 before, during and after the chassis 200 is moved in the **first direction (D1).**

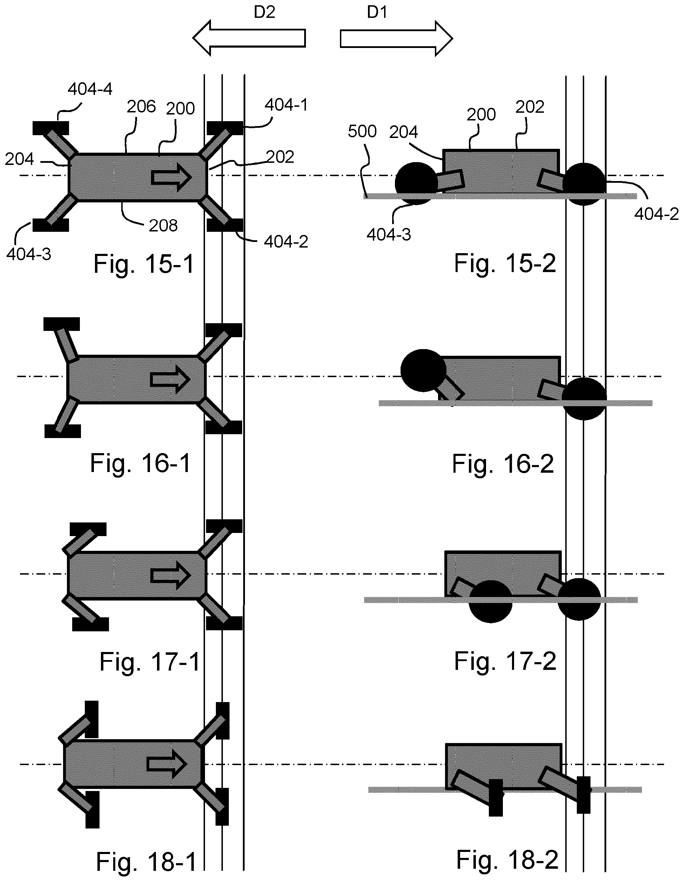

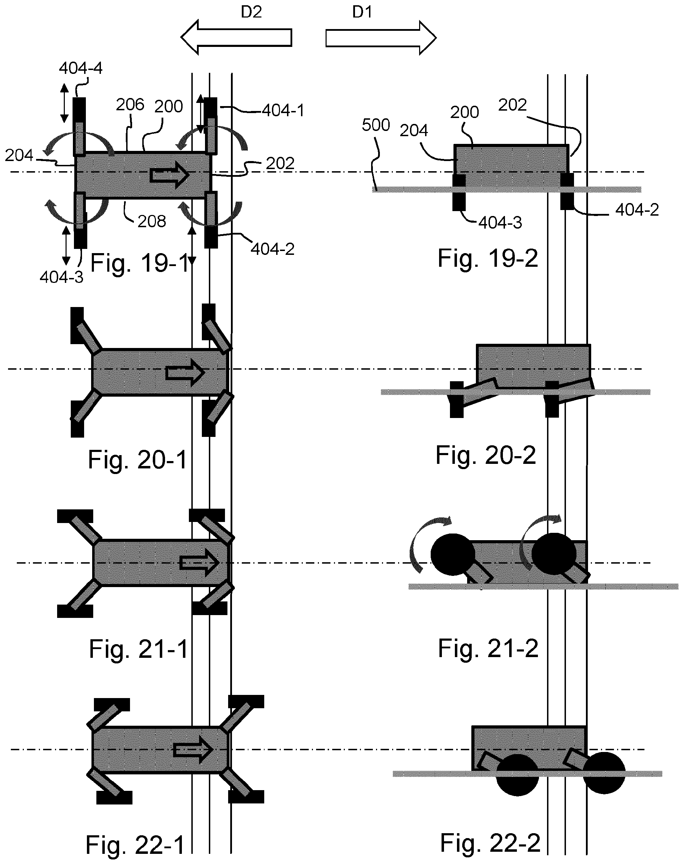

Figures 15-1 to 22-2 illustrate an alternative example of the **second mode of operation** in which the chassis suspension system 400 may be operable to draw the chassis 200 in the **first direction (D1)** by locating a first drive wheel 404-1 and a second drive wheel 404-2 of the plurality of drive wheels 404 into driving engagement with the support medium 500. After the first drive wheel 404-1 and the second drive wheel 404-2 have been placed into driving engagement with the support medium 500, the chassis 200 is located into engagement with the support medium 500.

The first drive wheel 404-1 and second drive wheel 404-2 are then controlled to pivot relative to the chassis 200 along the x-axis, y-axis and/or z-axis to exert a force on the support medium 500 in the **second direction (D2)** via the first drive wheel 404-1 and the second drive wheel 404-2 in order to generate a reaction force to propel (i.e. move, displace) the chassis 200 in the **first direction (D1)** through the support medium 500 and/or along the surface of the support medium 500.

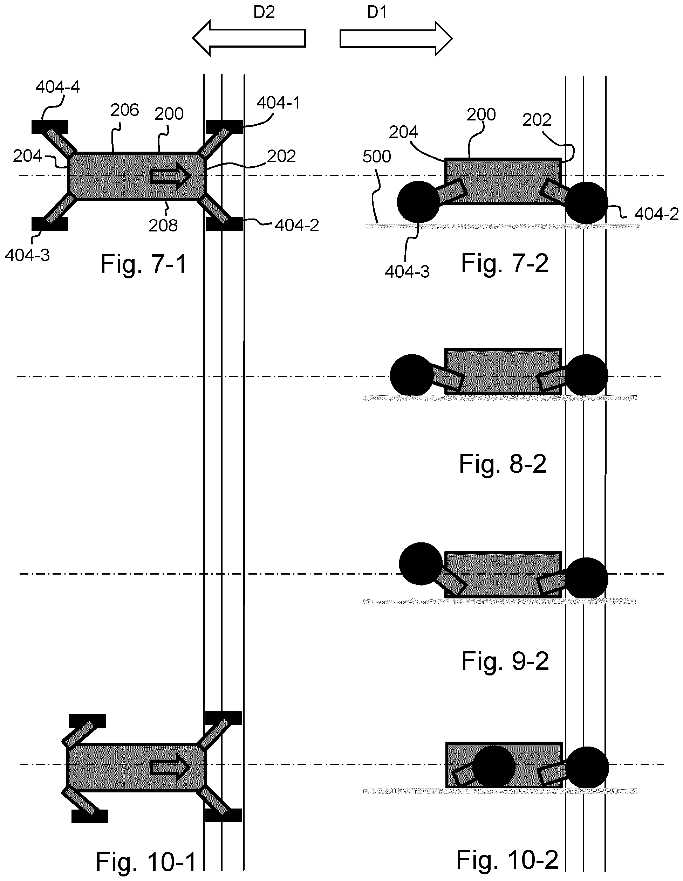

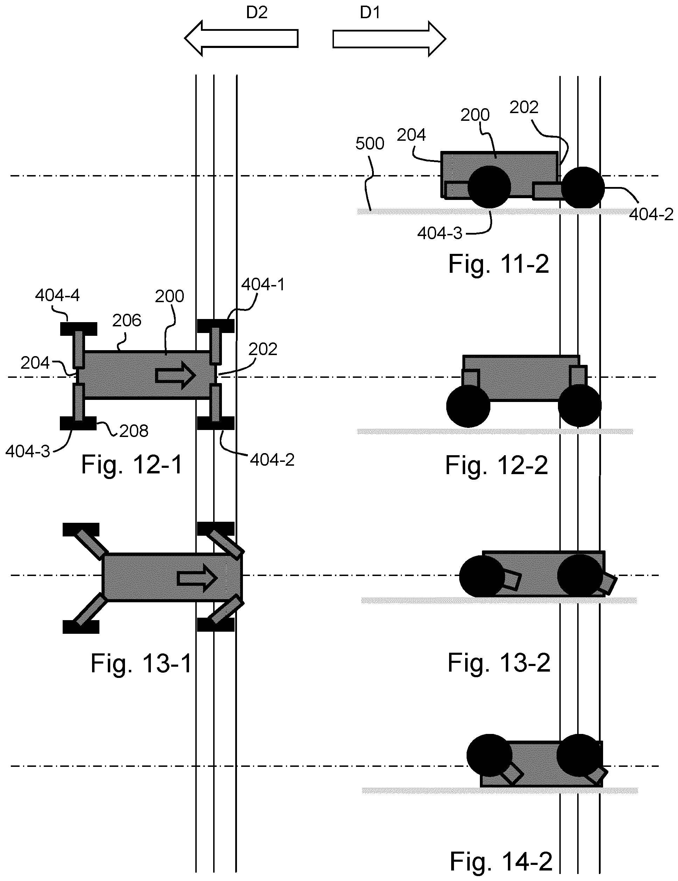

Figures 7-1 to 14-2 illustrate an alternative example of the **second mode of operation** in which the chassis suspension system 400 is operable to draw the chassis 200 in the **first direction (D1)** by locating a first drive wheel 404-1 and a second drive wheel 404-2 of the plurality of drive wheels 404 into driving engagement with the support medium 500 and then locating the chassis 200 into engagement with the support medium 500.

The first drive wheel 404-1 and second drive wheel 404-2 are then controlled to pivot relative to their respective wheel arms 402 and the respective wheel arms 402 are controlled to pivot relative to the chassis 200 along the x-axis, y-axis and/or z-axis to exert a force on the support medium 500 in the **second direction (D2)** via the first drive wheel 404-1 and the second drive wheel 404-2 in order to generate a reaction force to propel (for example move, displace) the chassis 200 in the **first direction (D1)** while lifting the chassis 200 away from the support medium 500 and then lowering the chassis 200 back onto the support medium 500.

In the examples shown the first drive wheel 404-1 is provided at the first end 202 and the first side 206 of the chassis 200, the second drive wheel 404-2 is provided at the first end 202 and the second side 208 of the chassis 200, the third drive wheel 404-3 is provided at the second end 204 and the second side 208 of the chassis 200, and the fourth drive wheel 404-4 is provided at the second end 204 and the first side 206 of the chassis 200.

There may be provided a method of operating a vehicle, the method comprising moving (e.g. translating, displacing) the chassis 200 from one location to another and/or changing the orientation of the chassis 200 from a **first orientation** to a **second orientation** using a **first mode of operation** wherein the drive system 700 is operable to drive the drive wheel 404 relative to (for example, along, over and/or through) the support medium 500.

For example, the control system 600 may be operable to control the drive system 700 to drive the or each wheel 404 to move the vehicle 10 from one location to another (for example to get closer to a target and/or to achieve a desired position relative to a target destination).

The method may further comprise the steps of moving (e.g. translating, displacing) the chassis 200 from one location to another and/or changing the orientation of the chassis 200 from a **first orientation** to a **second orientation** using a **second mode of operation** wherein the chassis suspension system 400 is operable to draw the chassis 200 in the **first direction (D1),** which extends or is parallel to a plane defined by the x-axis and y-axis, by locating a first drive wheel 404-1 of the plurality of drive wheels 404 into driving engagement with the support medium 500. The respective wheel arm 402 is then controlled to pivot relative to the chassis 200 along the x-axis, y-axis and/or z-axis to exert a force on the support medium 500 in the **second direction (D2)** via the first drive wheel 404-1 in order to generate a reaction force to propel the chassis 200 in the **first direction (D1).**

Hence in a vehicle according to the present disclosure, approximate positioning relative to a target location (e.g. another vehicle, delivery location or firing position) may be achieved by positioning the vehicle by driving the wheels 404. This could be achieved by driving forwards and/or backwards. In other examples this may utilize a mechanism which would allow the vehicle to rotate on the spot (e.g. about the z-axis).

Fine traverse may be achieved by manipulating the wheel arms and suspension once the vehicle is parked. The wheel arms are constructed so that the wheels can be moved towards/away from the vehicle chassis independently on all sides then the chassis can be rotated relative to the wheel position.

Final positional adjustment may be achieved by operating the suspension system 400 to roll the chassis about the x-axis, pitching the chassis about the y-axis or yawing the chasing about the z-axis.

In examples comprising a weapon system, the control system 600 may be operable to control the wheel arm actuators 430, wheel mounting member actuators 440, and (in examples where present) the gun barrel actuator 340 to position the barrel 300 to target an object. For example, the control system 600 may be operable to control the wheel arm actuators 430, wheel mounting member actuators 440, and the gun barrel actuator 340 to position the barrel 300 to target an object in response to a command from a user to target an object and/or in response to receipt of data which identifies and/or locates a target, and/or in response to sensing and/or identifying a target.

Examples of how the wheel arms 402 and wheels 404 may be controlled to propel the chassis 200 are shown in figures 3-1 to figure 30-2.

Figures 3.1 to 6.2 illustrate a first example of how the wheel arms 402 and wheels 404 may be controlled to propel the chassis 200 on a solid/firm support medium (i.e. the ground). In this example the wheel arms 402 are articulated to sequentially (e.g. individually and in order) to reposition the wheels 404 (e.g. lift up and move in the **first direction (D1))** with the chassis 200 held off the ground whilst adjusting the position of the chassis 200 relative to the wheels 404 in order to remain stable and to move the chassis 200 in the desired direction.

In a first step (as illustrated in figures 3-1, 3-2), the chassis 200 is balanced on the second wheel 404-2, third wheel 404-3 and fourth wheel 404-4. The first wheel 404-1 lifted and moved forwards, and the chassis 200 is moved forwards by the action of the wheel arms 402 of the second wheel 404-2, third wheel 404-3 and fourth wheel 404-4 pivoting relative to the chassis 200.

In a second step (as illustrated in figures 4-1, 4-2), the first wheel 404-1 is placed on the ground. The chassis 200 is balanced between the fourth wheel 404-4, first wheel 404-01 and second wheel 404-2. The third wheel 404-3 I slifted and moved forwards, and the chassis 200 is moved forwards by the action of the wheel arms 402 of the fourth wheel 404-4, first wheel 404-01 and second wheel 404-2 pivoting relative to the chassis 200.

In a third step (as illustrated in figures 5-1, 5-2), the third wheel 404-3 is placed on ground. The chassis 200 is balanced on the first wheel 404-01, third wheel 404-3 and fourth wheel 404-4. The second wheel 404-2 is lifted and moved forward, and the chassis 200 is moved forwards by the action of the wheel arms 402 of the first wheel 404-01, third wheel 404-3 and fourth wheel 404-4 pivoting relative to the chassis 200.

In a fourth step (as illustrated in figures 6-1, 6-2), the second wheel 404-2 is placed on ground. The chassis 200 is balanced on first wheel 404-01, second wheel 404-2 and third wheel 404-3. The fourth wheel 404-4 is lifted and moved forwards and the chassis 200 is moved forwards by the action of the wheel arms 402 of the first wheel 404-01, second wheel 404-2, and third wheel 404-3 pivoting relative to the chassis 200.

The four steps may be repeated as required to walk the vehicle forwards (ie in the **first direction (D1)).**

The method may be applied to vehicles of varying wheel number by appropriate modification of the sequence. The order of sequence may be modified to achieve the same result.

Figures 7-1 to 14-2 illustrate a second example of how the wheel arms 402 and wheels 404 may be controlled to propel the chassis 200 on a solid/firm support medium (i.e. the ground). The vehicle sequentially places its chassis 200 on the ground, repositions one or more wheel arms and lifts and repositions the chassis 200. This may be used on soft ground where it is desirable to spend less time on the wheels (higher ground pressure) and more time sat on the chassis (lower ground pressure).

In a first step (as illustrated in figures 7-1, 7-2) the vehicle is in normal driving configuration with chassis off the ground.

In a second step (as illustrated in figure 8-2) the vehicle lowers the chassis to the ground.

In a third step (as illustrated in figure 9-2) the rear wheels are lifted and moved forwards.

In a fourth step (as illustrated in figures 10-1, 10-2) the rear wheels are placed on the ground. All wheels are now in the forward position.

In a fifth step (as illustrated in figures 11-1 to 11-2) the chassis is lifted up.

In a sixth step (as illustrated in figures 12-1 to 12-2) the wheel arms are actuated to move the chassis forwards whilst keeping wheels nominally stationary.

In a seventh step (as illustrated in figures 13-1 to 13-2) the chassis is moved further forwards and lowered to the ground.

In an eighth step (as illustrated in figure 14-2) to repeat the cycle, both front and rear wheel arms are lifted and moved forwards.

Figures 15-1 to 22-2 illustrate a third example of how the wheel arms 402 and wheels 404 may be controlled to propel the chassis 200 on a fluid, semi-fluid and/or soft support medium (e.g. water or boggy ground). In this example, the chassis 200 is positioned on the ground, or floats on fluid or semi-fluid surface. The wheel arms 402 are driven such that the wheels stay approximately stationary relative to the terrain and the chassis 200 moves in the desired direction by floating on or sliding over the surface below it. The vehicle rests on the chassis 200 and lifts the wheels to move them appropriately to re-start sequence.

In a first step (as illustrated in figures 15-1, 15-2) the sequence starts with the chassis 200 (e.g. hull) floating and with the wheels in the normal driving position.

In a second step (as illustrated in figures 16-1, 16-2), rear wheel arms are lifted out of the support medium 500 and swung around to forward position.

In a third step (as illustrated in figures 17-1, 17-2) all wheel arms are in a forward position. The wheels are lowered into the support medium 500 an appropriate amount.

In a fourth step (as illustrated in figures 18-1, 18-2) the wheels are turned on the end of the wheel arms so that the wheels are normal to the direction of motion (or an appropriate angle to optimise propulsion).

In a fifth step (as illustrated in figures 19-1, 19-2) the wheel arms are driven about the vertical axis at both the chassis and wheel ends of the arms, whilst the wheels are controlled to remain normal to the direction of travel. The arms are swept in an arc, pushing the support medium 500 backwards and providing a propulsive force forwards. The chassis is urged to move forwards.

In a sixth step (as illustrated in figures 20-1, 20-2), following the full stroke of the arms the chassis has moved forwards.

In a seventh step (as illustrated in figures 21-1, 21-2) the wheels are now swung up, out of the support medium 500 and into their forwards positions. This may be done sequentially so that the other wheels can hold the chassis still.

In an eight step (as illustrated in figures 22-1, 22-2) the platform is now in same configuration as step 3 and is ready to repeat the process.

Throughout the sequence different wheel arms may be moved at different rates, or use different angles, in order to balance the movement of the vehicle and ensure the gross movement is in the intended direction.

Figures 23-1 to 30-2 illustrate a fourth example of how the wheel arms 402 and wheels 404 may be controlled to propel the chassis 200 on a solid/firm support medium (i.e. the ground). The chassis 200 may remain off the ground for the whole sequence, or may be dragged for the whole sequence, or may be lifted and lowered as part of the sequence. The following demonstrative sequence describes the sequence assuming the chassis remains off the ground.

In a first step (as illustrated in figures 23-1, 23-2) the vehicle 10 is in a driving position with the chassis off the ground.

In a second step (as illustrated in figures 24-1, 24-2) the rear wheel arms are articulated (potentially also driving the rear wheels) about their chassis end to move the rear arms into a forward position. The wheel angle is adjusted throughout this motion to allow the arm to move in an arc. Alternatively, the wheel arms could be lifted upwards and forwards, instead of rolling.

In a third step (as illustrated in figures 25-1, 25-2) all wheel arms are in forward position.

In a fourth step (as illustrated in figures 26-1, 26-2) the wheels are turned on the end of the wheel arms so that the wheels are normal to the direction of motion.

In a fifth step (as illustrated in figures 27-1, 27-2) the arms are driven about the vertical axis at both the chassis and wheel ends of the arms, whilst the wheels are controlled to remain normal to the direction of travel. The arms will sweep in an arc whilst the wheels roll laterally. The chassis will move forwards.

In a sixth step (as illustrated in figures 28-1, 28-2) following the full stroke of the arms the chassis has moved forwards.

In a seventh step (as illustrated in figures 29-1, 29-2) the wheels are now swung or lifted around into their forwards positions. This is done sequentially so that the other wheels can hold the chassis still, with brakes applied if necessary.

In an eighth step (as illustrated in figures 30-1, 30-2) the vehicle is now in same configuration as step 3 and is ready to repeat the process.

Throughout the sequence it may be necessary to apply brakes to the wheels, apply a driving torque to the wheels, or adjust wheel 'toe angle' in order to control gross movement of the vehicle on terrain where each separate wheel is likely to see differing loads and resistances.

Hence there is provided a vehicle with enhanced operability compared to examples of the related art.

The ability of the vehicle to switch between a first mode of operation in which it is propelled by rotating drive wheels and a second mode of operation in which it is propelled by the wheel arms enables the vehicle to overcome the limitations of conventional wheeled vehicles when travelling across a wide range of terrains.

This has particular advantage where drive wheels of a vehicle lose traction (for example when going over loose ground, sand or muddy ground), as a vehicle according to the present disclosure can switch from being moved by rotation of the drive wheels to using the wheel arms to move the vehicle to a location where traction can be achieved. Also if one or more of the wheels are damaged and/or the wheel drive system is impaired, then the vehicle is still operable to continue its journey.

The configuration of the vehicle is such that it is operable to achieve sideways movement of the vehicle into tight gaps. The configuration will also allow the vehicle to attempt to extract itself from boggy or muddy terrain where its wheels may have begun to spin and bury themselves in the ground. Additionally the configuration will allow the vehicle to decrease its ground pressure on soft terrain. The configuration may also allow the vehicle to move following failure of wheel rotational drive (hub motor, drive shaft etc). The configuration may allow a floating vehicle to swim through water.

Such a vehicle may have particular efficacy as part of a system in which it is configured as a transport vehicle operable to provide ammunition, or ammunition subcomponents, to another vehicle operable as a gun system.

Such a vehicle may also be advantageous as part of a weapon system (for example where the vehicle configured to carry a gun system).

Vehicles according to the present disclosure may have particular efficacy since they enable alignment between vehicle loading systems in a transport vehicle and a receiving system of a further vehicle (for example one carrying a gun system).

In the examples in which a vehicle is provided with a weapon system, the configuration of the present disclosure enables a relatively lightweight vehicular solution for delivering a weapon system to a firing position and then targeting the gun of the weapon system, compared to examples of the related art. This is achieved by using the chassis suspension system 400 to position a gun barrel of the weapon system towards a targeting position so that further adjustment, if needed, is only for elevation of the gun barrel, which may be done by a separate actuator or manually.

Also since the wheel arms and wheels may be extended forward and aft of the chassis 2200 this provides extra stability during the firing cycle.

Such a vehicle may have particular efficacy as part of a system in which it is configured as a recovery vehicle, for example carrying a lifting arm or crane used to deliver and/or recover equipment from locations and other vehicles, or to recover over vehicles from where they have become stranded (for example because of damage or have become stuck because of a feature of the terrain.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A vehicle comprising:
a chassis extending along an x-axis, a first end of the chassis and a second end of the chassis spaced apart from one another along the x-axis; the chassis extending along a y-axis, a first side of the chassis and a second side of the chassis spaced apart from one another along the y-axis; the x-axis being at right angles to the y-axis;
the x-axis defining a chassis roll axis, the y-axis defining a chassis pitch axis and a z-axis defining a chassis yaw axis; the z-axis being perpendicular to the x-axis and y-axis;
a chassis suspension system comprising a plurality of wheel arms, each wheel arm extending away from a different chassis mount on the chassis to a respective drive wheel, each drive wheel being pivotably mounted relative to its respective wheel arm, and
wherein each drive wheel is coupled to a drive system operable to drive the drive wheel;
the vehicle being configured to move from one location to another and/or change the orientation of the chassis from a **first orientation** to a **second orientation** using:
a **first mode of operation** wherein the drive system is operable to drive the drive wheel relative to the support medium; and
a **second mode of operation** wherein :
the chassis suspension system is operable to draw the chassis in a **first direction,** which extends in, or is parallel to, a plane defined by the x-axis and y-axis, by:
locating a first drive wheel of the plurality of drive wheels into driving engagement with the support medium;
controlling the respective wheel arm to pivot relative to the chassis along the x-axis, y-axis and/or z-axis to exert a force on the support medium in a **second direction** via the first drive wheel in order to generate a reaction force to propel the chassis in the **first direction,** wherein the **second direction** is in an opposite direction to the **first direction.**

2. A vehicle as claimed in claim 1 wherein, in the **second mode of operation,** the or each drive wheel is operable pivot relative to its respective wheel arm; and
wherein the step of locating a first drive wheel of the plurality of drive wheels into driving engagement with the support medium comprises:
moving the first drive wheel relative to the support medium with the drive system engaged to drive the drive wheel; or
moving the first drive wheel relative to the support medium with the drive system dis-engaged and the drive wheel braked; or
moving the first drive wheel relative to the support medium with the drive system dis-engaged and the first drive wheel unbraked so the drive wheel is free to rotate.

3. A vehicle as claimed in claim 1 or claim 2 wherein, in the **second mode of operation,** the first drive wheel is braked so that the drive wheel cannot rotate or is un-braked so that the drive wheel is free to rotate.

4. A vehicle as claimed in any one of claims 1 to 3 wherein, in the **second mode of operation,** during at least part of the period when the respective wheel arm is pivoted relative to the chassis along the x-axis, y-axis and/or z-axis to exert a force on the support medium in the **second direction** via the first drive wheel in order to generate a reaction force to propel the chassis in the **first direction:**
the first drive wheel is driven by the drive system; or
the first drive wheel is braked by the drive system.

5. A vehicle as claimed in any one of claims 1 to 4 wherein the **second mode of operation** further comprises drawing the chassis in the **first direction** by:
locating a third drive wheel of the plurality of drive wheels into driving engagement with the support medium;
controlling the third drive wheel to pivot relative to its respective wheel arm and/or control the respective wheel arm to pivot relative to the chassis along the x-axis, y-axis and/or z-axis to exert a force on the support medium in the **second direction** via the third drive wheel in order to generate a reaction force to propel the chassis in the **first direction;** wherein
the first drive wheel is provided at the first end and first side of the chassis; and
the third drive wheel is provided at the second end and the second side of the chassis.

6. A vehicle as claimed in any one of claims 1 to 4 wherein in the **second mode of operation** the chassis suspension system is operable to draw the chassis in the **first direction,** by:
locating a first drive wheel and a second drive wheel of the plurality of drive wheels into driving engagement with the support medium;
locating the chassis into engagement with the support medium; and
controlling the first drive wheel and second drive wheel to pivot relative to their respective wheel arms and/or control the respective wheel arms to pivot relative to the chassis along the x-axis, y-axis and/or z-axis to exert a force on the support medium in the **second direction** via the first drive wheel and the second drive wheel in order to generate a reaction force to propel the chassis in the **first direction.**

7. A vehicle as claimed in any one of claims 4, 5, 6 wherein in the **second mode of operation** the chassis suspension system is operable to:
control the wheel arms to support the chassis spaced apart from the support medium before, during and after the chassis is moved in the **first direction.**

8. A vehicle as claimed in any one of claims 1 to 4 wherein in the **second mode of operation** the chassis suspension system is operable to draw the chassis in the **first direction** by:
locating a first drive wheel and a second drive wheel of the plurality of drive wheels into driving engagement with the support medium;
locating the chassis into engagement with the support medium; and
controlling the first drive wheel and second drive wheel to pivot relative to the chassis along the x-axis, y-axis and/or z-axis to exert a force on the support medium in the **second direction** via the first drive wheel and via the second drive wheel in order to generate a reaction force to propel the chassis in the **first direction** through the support medium and/or along the surface of the support medium.

9. A vehicle as claimed in any one of claims 1 to 4 wherein in the **second mode of operation** the chassis suspension system is operable to draw the chassis in the **first direction** by:
locating a first drive wheel and a second drive wheel of the plurality of drive wheels into driving engagement with the support medium;
locating the chassis into engagement with the support medium; and
controlling the first drive wheel and second drive wheel to pivot relative to their respective wheel arms and/or controlling the respective wheel arms to pivot relative to the chassis along the x-axis, y-axis and/or z-axis to exert a force on the support medium in the **second direction** via the first drive wheel and the second drive wheel in order to generate a reaction force to propel the chassis in the **first direction** while lifting the chassis away from the support medium and then lowering the chassis back onto the support medium.

10. A vehicle as claimed in claim 6, claim 8 or claim 9 wherein:
the first drive wheel is provided at the first end and the first side of the chassis; and
the second drive wheel is provided at the first end and the second side of the chassis.

11. A vehicle as claimed in any one of the preceding claims wherein:
each wheel arm has a chassis mount end and a drive wheel mount end; the chassis mount end of each wheel arm being provided with a chassis mounting member, the chassis mount end of each wheel arm and chassis mounting member being pivotable relative to one another around a chassis mount pivoting axis; and the chassis mounting member is configured to support the chassis mount end of the wheel arm so that the wheel arm and chassis mounting member are operable to pivot relative to one another about the chassis mount pivoting axis; and
the drive wheel mount end of each wheel arm is provided with a drive wheel mounting member, the drive wheel mount end of each wheel arm and drive wheel mounting member being pivotable relative to one another around a drive wheel mount pivoting axis; and each drive wheel mounting member is configured to couple with the drive wheel mount end of the wheel arm so that each wheel arm and drive wheel mounting member are operable to pivot relative to one another about the drive wheel mount pivoting axis;
each wheel arm is provided with a wheel arm actuator to control the orientation of each wheel arm relative to the chassis; and
each drive wheel mounting member is provided with a drive wheel mounting member actuator to control the orientation of each drive wheel, relative to its respective wheel arm;
wherein the drive wheel drive system comprises an actuator coupled to the or each drive wheel;
each of the wheel arm actuators, drive wheel mounting member actuators and drive wheel drive system actuators are operable independently of each other.

12. A vehicle as claimed in claim 11 wherein the vehicle further comprises a control system operable to control the wheel arm actuators, drive the wheel mounting member actuators and drive wheel drive system actuators to execute the **first mode of operation** and the **second mode of operation.**

13. A vehicle as claimed in any one of claims 1 to 12 wherein:
the chassis is configured to be buoyant; and/or
the underside of the chassis comprises grip/tread type features.

14. A vehicle as claimed in any one of claims 1 to 13 wherein the drive wheel is:
configured for direct engagement with the support medium; or
configured for indirect engagement with the support medium.

15. A vehicle as claimed in any one of claims 1 to 14 wherein the chassis in part defines, supports and/or carries a payload, wherein the payload comprises a weapon system, a weapon loading system, an ammunition delivery system, an evacuation pod and/or a crane.
